# EUROPÄISCHE PATENTSCHRIFT

(11) **EP 3 856 401 B1**
(45) Veröffentlichungstag und Bekanntmachung des Hinweises auf die Patenterteilung: **06.12.2023**
(21) Anmeldenummer: 19794521.5
(22) Anmeldetag: 24.10.2019
(51) Int. Cl.: B01F 31/10, B01F 31/20, F16D 1/10, F16D 1/116

(54) **SCHÜTTEL- UND/ODER MISCHGERÄT**
SHAKING AND/OR MIXING DEVICE
APPAREIL D'AGITATION ET/OU MÉLANGEUR

(30) Priorität: 24.10.2018 DE 202018004940 U
(43) Veröffentlichungstag der Anmeldung: 04.08.2021
(73) Patentinhaber: Hans Heidolph GmbH, 93309 Kelheim (DE)
(72) Erfinder: BAYER, Maximilian, 91183 Abenberg (DE); WERNER, Frank, 91322 Gräfenberg (DE)
(74) Vertreter: Prüfer & Partner mbB Patentanwälte · Rechtsanwälte
(86) Internationale Anmeldenummer: PCT/EP2019/079004
(87) Internationale Veröffentlichungsnummer: WO 2020/084040

(56) Entgegenhaltungen:
- EP-A1- 3 327 187
- EP-A2- 1 393 797
- WO-A1-2016/156472
- CN-A- 107 874 589
- US-A1- 2013 188 442
- US-A1- 2017 368 516

## Beschreibung

Die vorliegende Erfindung betrifft ein Schüttel- und/oder Mischgerät.

Ein Schüttel- und/oder Mischgerät, im Folgenden vereinfacht als Schüttel- und Mischgerät bezeichnet, ist ein Laborgerät, welches einen Antrieb umfasst, der eine Exzentereinheit mit einer Exzenternabe antreibt. Die Bewegung der Exzenternabe wird auf eine Probenhalterung übertragen, an der die zu behandelnde Probe bzw. die zu behandelnden Proben in einem oder mehreren Probenbehältern vorgesehen ist bzw. sind. Dadurch wird bzw. werden der bzw. die Probenbehälter in periodische ein-, zwei- oder dreidimensional ausgeführte Bewegungen versetzt, wie z.B. rotierende, vibrierende, kreisförmige, taumelnde und/oder wippende Bewegungen. Dies führt zu einer Durchmischung bzw. einem Schütteln und Mischen der Probe(n).

Je nach Beschaffenheit, insbesondere geometrischer Form, der Probenbehälter bzw. des Probenbehälters und Anzahl der in dem Schüttel- und Mischgerät zu behandelnden Proben sind aus dem Stand der Technik verschiedene Halterungen für Probenbehälter bekannt. In der Regel wird die Halterung dabei direkt oder mittelbar, beispielweise über einen Schütteltisch, an einem Außenumfang der Exzenternabe befestigt.

Aufgrund der Geometrie der Exzenternabe sind die Anbringmöglichkeiten jedoch begrenzt und das Bereitstellen an individuelle Anwendungen bzw. Probenbehälter angepasster Halterungen mit einem erheblichen zeitlichen und/oder konstruktiven und somit auch kostenintensiven Aufwand möglich.

Das Dokument US 2017/368516 A1 beschreibt eine Mischvorrichtung mit einem Motor, einer gerillten Platte und einer oberen Platte. Die gerillte Platte ist auf dem Motor vorgesehen und die obere Platte auf der gerillten Platte. Auf der oberen Platte ist ein Gefäß angeordnet. Im Betrieb werden durch den Motor die gerillte Platte, die obere Platte und das Gefäß gedreht.

Die Aufgabe der vorliegenden Erfindung besteht darin, ein alternatives bzw. verbessertes Schüttel- und/oder Mischgerät bereitzustellen, das insbesondere ein erleichtertes Austauschen der Halterung, an der der oder die Probenbehälter vorgesehen ist bzw. sind, ermöglicht bzw. das Bereitstellen verschiedener Halterungen auf einfache Art und Weise ermöglicht.

Die Aufgabe wird gelöst durch ein Schüttel- und/oder Mischgerät gemäß Anspruch 1. Weiterbildungen der Erfindung sind in den Unteransprüchen angegeben.

Ein erfindungsgemäßes Schüttel- und/oder Mischgerät entsprechend Anspruch 1 umfasst einen Antrieb mit einer Antriebsachse, eine von der Antriebsachse angetriebene Exzentereinheit mit einer Exzenternabe und eine Halterung zur Aufnahme zumindest einer durch das Schüttel- und/oder Mischgerät zu behandelnden Probe. Die Exzenternabe und die Halterung sind mittels einer lösbaren Verbindung miteinander verbindbar um eine Bewegung der Exzenternabe auf die Halterung zu übertragen, wobei die lösbare Verbindung in Verlängerung der Antriebsachse vorgesehen ist und eine Mittelachse der Halterung von der Antriebsachse beabstandet ist.

Der Antrieb ist vorzugsweise ein elektrischer Antrieb, beispielsweise ein Motor. Die Halterung kann zur Aufnahme einer oder mehrere zu durchmischender Proben ausgebildet sein, wobei jede der Proben in einem Probenbehälter bereitgestellt ist. Mit einem Übertragen einer Bewegung der Exzenternabe auf die Halterung ist nicht zwingend gemeint, dass die Halterung dieselbe Bewegung ausführt wie die Exzenternabe, sondern dass die Bewegung der Exzenternabe eine Bewegung der Halterung bewirkt. Beispielsweise kann die Bewegung der Halterung eine vibrierende bzw. schwingende Bewegung sein.

Unter einer lösbaren Verbindung wird im Rahmen der vorliegenden Anmeldung eine Verbindung verstanden, die ohne Beschädigung der Bauteile, die durch die lösbare Verbindung miteinander verbunden werden, d. h. der Halterung und der Exzenternabe, wieder gelöst werden kann.

Dadurch ist es beispielsweise möglich, ein Durchmischen, d. h. Schütteln und Mischen der an der Halterung vorgesehenen Probe(n) zu bewirken. Die lösbare Verbindung zwischen der Halterung und der Exzenternabe ermöglicht es beispielsweise, eine an den jeweiligen Verwendungszweck angepasste Halterung zu verwenden bzw. an dem Schüttel- und Mischgerät anzubringen, d. h. eine an eine geometrische Form eines oder mehrerer Probenbehälter und/oder eine Anzahl von zu behandelnde Proben angepasste Halterung. So kann beispielsweise eine Mehrzahl an Halterungen bereitgestellt sein und eine an den jeweiligen Einsatzzweck angepasste Halterung ausgewählt werden. Durch die lösbare Verbindung kann die jeweilige Halterung schnell und auf einfache Art und Weise an dem Schüttel- und Mischgerät angebracht werden, d. h. ein und dasselbe Schüttel- und Mischgerät kann mit verschiedenen Halterungen verwendet werden.

Vorzugsweise ist ein Teil der Verbindung als Adapterelement bereitgestellt, welches an der jeweiligen Halterung anbringbar ist. Damit ist es beispielsweise möglich, den entsprechenden Teil der Verbindung, auch als Kupplungsabschnitt bezeichnet, nur einmal bereitzustellen und mit verschiedenen Halterungen zu verwenden, was die Herstellung der Halterung(en) vereinfachen kann.

Vorzugsweise weist die Exzenternabe einen ersten Kupplungsabschnitt der lösbaren Verbindung auf und die Halterung weist einen zweiten Kupplungsabschnitt der lösbaren Verbindung auf, wobei der erste und der zweite Kupplungsabschnitt in Bezug auf ihre geometrische Form zumindest teilweise komplementär ausgebildet sind. Damit ist beispielsweise eine konstruktiv unkomplizierte Ausführungsform einer lösbaren Verbindung zum Verbinden der Exzenternabe mit der Halterung bereitgestellt.

Vorzugsweise umfasst einer der beiden Kupplungsabschnitte zumindest eine Bohrung und der andere der beiden Kupplungsabschnitte zumindest einen in die Bohrung einbringbaren und komplementär zur Bohrung ausgebildeten Stecker. Damit bilden der Stecker und die Bohrung bzw. die zwei Kupplungsabschnitte eine formschlüssige Verbindung in radialer Richtung (senkrecht zur zentralen Achse), d. h. eine formschlüssige Verbindung, die ein Verdrehen des Steckers in der Bohrung bzw. der zwei Kupplungsabschnitte zueinander verhindert. Es kann auch mehr als ein miteinander kooperierendes Bohrungs-Stecker-Paar vorgesehen sein. Durch eine derartige Steckverbindung bzw. Steckkupplung, d. h. ein Stecker-Bohrungs-Paar, um zwei Komponenten miteinander zu verbinden, ist beispielsweise eine einfach zu realisierende lösbare Verbindung bereitgestellt. Die Steckverbindung ist zudem eine selbstzentrierende Verbindung, was das Verbinden der zwei Kupplungsabschnitte beispielsweise erleichtern kann.

Die Bohrung und der Stecker weisen weiter bevorzugt einen Querschnitt auf, der von einer kreisrunden Form abweicht, vorzugsweise einen eckigen Querschnitt, weiter bevorzugt einen Querschnitt in Form eines regelmäßigen Polygons, insbesondere eines regelmäßigen Sechsecks. Dadurch ist es beispielsweise möglich, eine Rotationsbewegung des Steckers in der Bohrung, d. h. der Halterung gegenüber der Exzenternabe bzw. dem Schüttel- und Mischgerät im Wesentlichen zu verhindern, d. h. die Verbindung ist eine gegen ein Verdrehen gesicherte Verbindung. Unter einem regelmäßigen Polygon wird dabei ein ebenes Polygon verstanden, das sowohl gleichseitig als auch gleichwinklig ist. Bei einem regelmäßigen Polygon sind demnach alle Seiten gleich lang und alle Innenwinkel gleich groß.

Vorzugsweise weist der Stecker einen Querschnitt auf, dessen Querschnittsfläche geringfügig kleiner ist als die Querschnittsfläche eines Querschnitts der Bohrung. Der Begriff "geringfügig kleiner" meint dabei, dass die Querschnittsfläche des Steckers einerseits klein genug ist um in die Bohrung hinein zu passen, andererseits jedoch groß genug, um im Wesentlichen spielfrei, d. h. im Wesentlichen spaltfrei, in der Bohrung vorgesehen zu sein. Damit wird beispielsweise ein guter, insbesondere verlustarmer, Kraftübertrag bzw. Übertrag der Bewegung von der Exzenternabe auf die Halterung ermöglicht.

Vorzugsweise umfasst die Bohrung einen Verbreiterungsabschnitt, dessen Innendurchmesser größer ist als der Innendurchmesser eines benachbarten Bohrungsabschnitts und wobei der Stecker ebenfalls einen Verbreiterungsabschnitt umfasst, dessen Außendurchmesser größer ist als der Außendurchmesser eines benachbarten Steckerabschnitts, und wobei der Verbreiterungsabschnitt des Steckers in den Verbreiterungsabschnitt der Bohrung einrastet, wenn der Stecker in die Bohrung eingebracht wird. Weiter bevorzugt ist der Verbreiterungsabschnitt des Steckers durch einen O-Ring gebildet, der in Umfangsrichtung an dem Stecker vorgesehen ist, vorzugsweise in einer Umfangsnut des Steckers. Die benachbarten Bohrungsabschnitte und/oder Steckerabschnitte sind dabei weiter bevorzugt entlang einer Bohrungsachse bzw. einer Achse des Steckers einander benachbart, d. h. nebeneinander angeordnete Abschnitte. Die Verbreiterungsabschnitte bilden somit eine kraftschlüssige Verbindung zwischen dem Stecker und der Bohrung bzw. zwischen den beiden Kupplungsabschnitten in axialer Richtung. Die Verbreiterungsabschnitte ermöglichen es beispielsweise, den Stecker gegen ein unbeabsichtigtes Lösen aus der Bohrung, d. h. in axialer Richtung, zu sichern. Zum Lösen des Steckers bzw. Entnehmen des Steckers aus der Bohrung kann beispielsweise eine definierte axiale Kraft erforderlich sein, um die Halterung von dem Schüttel- und Mischgerät zu lösen. Ein O-Ring, insbesondere ein flexibler, beispielsweise aus Gummi gebildeter O-Ring, ist beispielsweise eine einfach zu realisierende Ausführungsform des Verbreiterungsabschnitts des Steckers. Alternativ kann der Verbreiterungsabschnitt des Steckers auch durch einen in Umfangsrichtung des Steckers vorgesehenen Vorsprung gebildet sein, welcher vorzugsweise flexibel ist, um ein Passieren des Vorsprungs des Steckers durch den engeren Bohrungsabschnitts zu erlauben, bevor der Vorsprung in dem Verbreiterungsabschnitt der Bohrung einrastet.

Vorzugsweise weisen der erste Kupplungsabschnitt, der zweite Kupplungsabschnitt und die Antriebsachse eine gemeinsame zentrale Achse auf wenn der erste und der zweite Kupplungsabschnitt miteinander verbunden sind. Die zentrale Achse kann beispielsweise durch eine Drehachse der Antriebsachse definiert sein. Damit kann beispielsweise ein guter Kraftübertrag von dem Antrieb auf die Halterung ermöglicht werden. Zudem ist dadurch beispielsweise eine einfach zu realisierende Verbindung bereitgestellt, die in Verlängerung der Antriebsachse vorgesehen ist.

Weiter bevorzugt ist eine Mittelachse der Halterung von der zentralen Achse beabstandet bzw. versetzt, wobei die Mittelachse der Halterung noch weiter bevorzugt parallel zu der zentralen Achse ist. Dies bedeutet, dass die Mittelachse der Halterung nicht identisch ist mit der zentralen Achse der Kupplungsabschnitte und der Antriebsachse. Durch diese exzentrische Anordnung der Achsen kann beispielsweise eine gute Durchmischung der Probe(n) erzielt werden.

Vorzugsweise ist die Bohrung an dem ersten Kupplungsabschnitt, d. h.an der Exzenternabe bzw. dem Schüttel- und Mischgerät, vorgesehen und der Stecker ist an dem zweiten Kupplungsabschnitt, d. h. der Halterung, vorgesehen. Dies kann ein Befestigen der Halterung an dem Schüttel- und Mischgerät beispielsweise vereinfachen.

Vorzugsweise ist der erste Kupplungsabschnitt gegen ein Verdrehen gegenüber der Exzenternabe gesichert. Dies kann beispielsweise durch eine nicht lösbare Verbindung zwischen dem ersten Kupplungsabschnitt und der Exzenternabe, z. B. durch eine Klebeverbindung, d. h. Aufkleben des ersten Kupplungsabschnitts auf der Exzenternabe, realisiert sein. Dadurch kann beispielsweise ein Kraftübertrag von der Exzenternabe auf die Halterung verbessert werden.

Vorzugsweise ist der erste Kupplungsabschnitt auf und/oder an der Exzenternabe befestigt, weiter bevorzugt unlösbar auf der Exzenternabe befestigt. Eine unlösbare Befestigung kann beispielsweise durch Aufkleben oder Auflöten realisiert sein. Eine lösbare Befestigung kann beispielsweise eine Verschraubung sein. Durch eine derartige lösbare oder unlösbare Befestigung kann beispielsweise ein bereits vorhandenes Schüttel- und Mischgerät mit einer lösbaren Verbindung bzw. dem ersten Kupplungsabschnitt der Verbindung aus- oder nachgerüstet werden. Alternativ kann der erste Kupplungsabschnitt auch integral mit der Exzenternabe bereitgestellt sein.

Vorzugsweise ist der zweite Kupplungsabschnitt an einem Adapterelement vorgesehen ist, welches mit der Halterung verbindbar ist. Das Adapterelement kann auswechselbar an der Halterung vorgesehen sein oder integral mit dieser ausgebildet sein. Ein auswechselbares Adapterelement kann beispielsweise mit verschiedenen Halterungen verwendbar sein, so dass eine Halterung beispielsweise auf einfache Art und Weise mit dem zweiten Kupplungsabschnitt bereitgestellt werden kann.

Weitere Merkmale und Zweckmäßigkeiten der Erfindung ergeben sich aus der Beschreibung von Ausführungsbeispielen anhand der beigefügten Zeichnungen.
- Fig. 1: ist eine schematische Ansicht eines Schüttel- und Mischgeräts gemäß einer Ausführungsform der vorliegenden Erfindung mit einer separat von dem Schüttel- und Mischgerät dargestellten Halterung für einen Probenbehälter,
- Fig. 2a: ist eine schematische und im Schnitt dargestellte Ansicht eines Ausschnitts des in Fig. 1 gezeigten Schüttel- und Mischgeräts und eines Ausschnitts der Halterung,
- Fig. 2b: ist eine schematische und im Schnitt dargestellte Ansicht der in Fig. 2a gezeigten Ausschnitte des Schüttel- und Mischgeräts und der Halterung bei aufgesetzter Halterung,
- Fig. 3: ist eine schematische Ansicht des in Fig. 1 gezeigte Schüttel- und Mischgeräts mit aufgesetzter Halterung und
- Fig. 4: ist eine schematische und im Schnitt dargestellte Ansicht des in Fig. 3 gezeigten Schüttel- und Mischgeräts mit aufgesetzter Halterung.

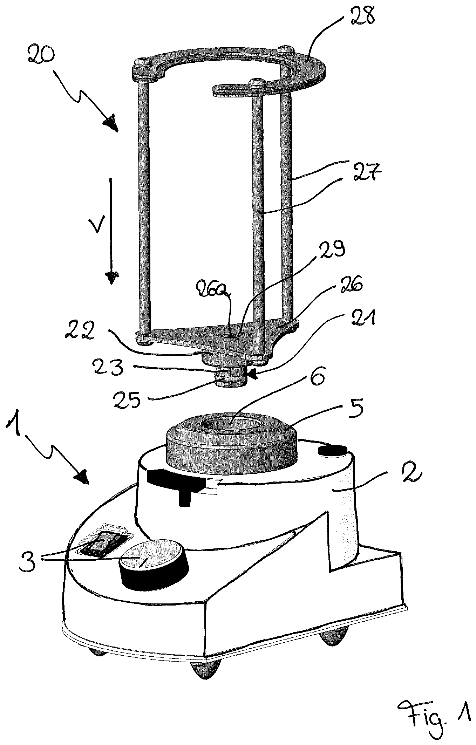

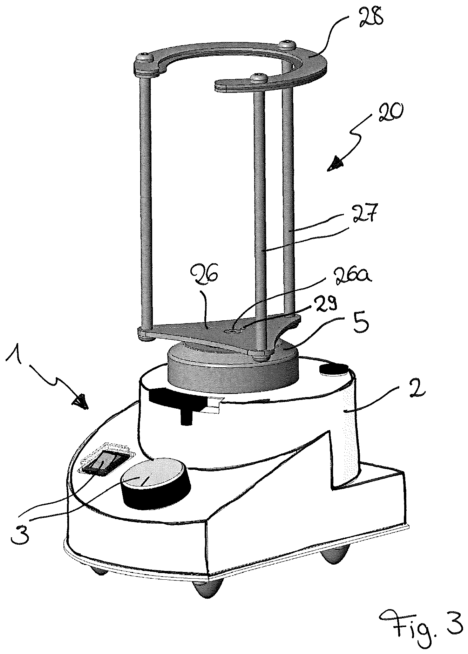

Im Folgenden wird mit Bezug auf Fig. 1 bis 4 eine Ausführungsform der vorliegenden Erfindung beschrieben. Fig. 1 zeigt ein Schüttel- und Mischgerät 1 mit einem Gehäuse 2 und eine Halterung 20 zur Aufnahme eines oder mehrerer in den Figuren nicht gezeigte(r) Probenbehälter. In Fig. 1 ist die Halterung 20 separat von dem Schüttel- und Mischgerät 1 gezeigt, d. h. nicht auf das Schüttel- und Mischgerät 1 aufgesetzt bzw. mit diesem verbunden. An der Unterseite der Halterung 20, d. h. an der zu dem Schüttel- und Mischgerät weisenden Seite, ist ein Adapterelement 21 vorgesehen.

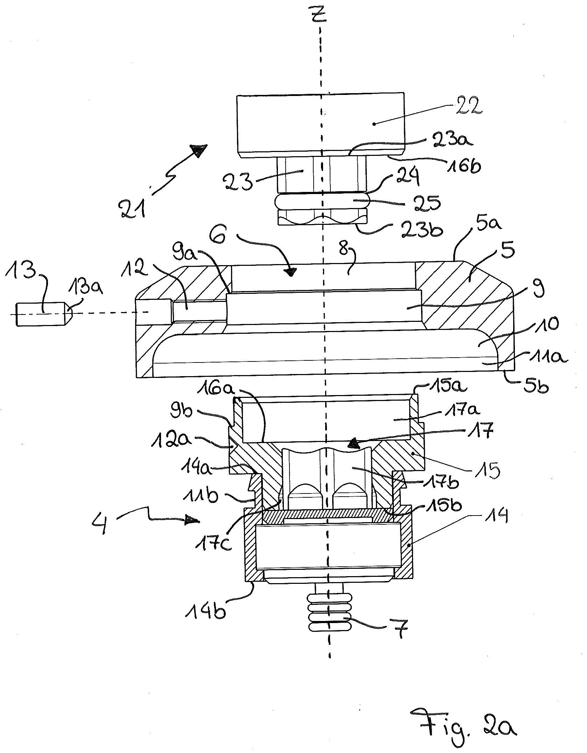

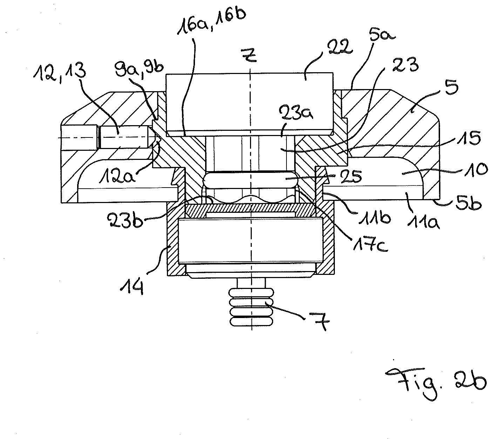

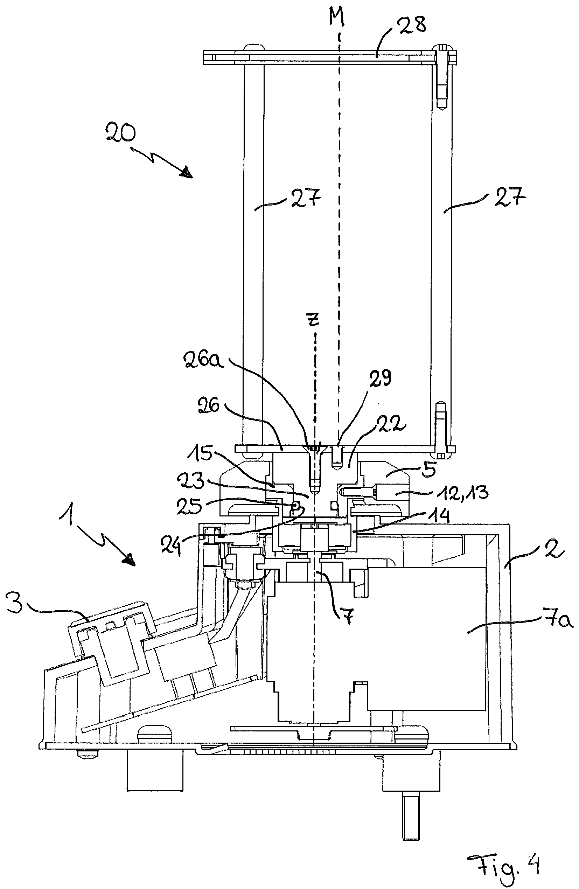

An dem Gehäuse 2 sind Einstell- und/oder Bedienelemente 3 vorgesehen zum Einstellen von Betriebsparametern des Schüttel- und Mischgeräts 1, beispielsweise einer Frequenz und/oder Amplitude der Schüttel- bzw. Mischbewegung. In dem Gehäuse 2 ist weiter ein Antrieb 7a (s. Fig. 4) vorgesehen, beispielsweise ein Motor, zum Antreiben einer Exzentereinheit 4 (s. Fig. 2a, 2b, 4) des Schüttel- und Mischgeräts 1. Der obere, zu der Halterung 20 weisende Gehäuseabschnitt 5 weist eine mittige Ausnehmung 6 auf zur Aufnahme des Adapterelements 21 bzw. zumindest dessen zweiten Kupplungsabschnitts (s. u.). Der obere Gehäuseabschnitt 5 ist vorzugsweise nicht integral mit dem Gehäuse 2 ausgebildet, sondern ein separater Gehäuseabschnitt, der an dem Gehäuse 2 mittels einer flexiblen Befestigung befestigt ist. Die flexible Befestigung erlaubt dabei vorzugsweise bestimmte Bewegungen des oberen Gehäuseabschnitts 5, beispielsweise wippende, taumelnde und/oder vibrierende Bewegungen, während sie andere bestimmte Bewegungen des oberen Gehäuseabschnitts, beispielsweise ein Verdrehen, sowie das Lösen des oberen Gehäuseabschnitts 5 von dem Gehäuse 2 verhindert.

Die in Fig. 1 gezeigte Halterung 20 umfasst rein beispielhaft eine dreieckige Grundplatte 26 mit einem Schwerpunkt 29 und drei voneinander beabstandete und sich vertikal nach oben erstreckende Haltestäbe 27, die jeweils mit ihren unteren Enden an den Ecken der dreieckigen Grundplatte 26 angebracht sind. Eine Mittelachse M der Halterung verläuft bei der in Fig. 1 gezeigten Halterung 20 parallel zu der Erstreckungsrichtung der Haltestäbe 27, d. h. senkrecht zur Grundplatte 26, durch den Schwerpunkt 29 der Grundplatte 26 (s. Fig. 4). Die oberen Enden der Haltestäbe 27 sind über einen Haltering 28 miteinander verbunden, der die obere Begrenzung der Halterung 20 bildet. Der in Fig. 1 gezeigte Haltering 28 weist zwischen zwei der Haltestäbe 27 eine Öffnung auf zum Einbringen eines nicht gezeigten Probenbehälters.

In die Halterung 20 ist ein nicht gezeigter Probenbehälter einbringbar, so dass dieser von der Halterung 20 gehalten wird. Beispielsweise kann der Probenbehälter auf der Grundplatte 26 platziert werden, wobei die Haltestäbe 27 ein seitliches Verrutschen des Probenbehälters verhindern. Alternativ kann der Probenbehälter auch in der Halterung 20 an dem Haltering 28 hängend platziert werden. Vorzugsweise umfasst der Haltering 28 in diesem Fall einen Clip, der ein unbeabsichtigtes Lösen des Probenbehälters verhindert.

An der Unterseite der Grundplatte 26, d. h. an der den Haltestäben 27 abgewandten Seite der Grundplatte 26 ist ein Adapterelement 21 vorgesehen. Das Adapterelement 21 umfasst einen zweiten Kupplungsabschnitt, welcher als ein Stecker 23 ausgebildet ist, zum lösbaren Verbinden der Halterung 20 mit dem Schüttel- und Mischgerät 1 und einen Adapterabschnitt 22, welcher den zweiten Kupplungsabschnitt mit der Halterung 20 verbindet. Der Adapterabschnitt 22 kann integral mit der Halterung 20 gebildet sein. Alternativ kann der Adapterabschnitt 22 mittels einer lösbaren Befestigung, beispielsweise einer in Fig. 1 schematisch gezeigten Verschraubung 26a, einer Steckverbindung, einer magnetischen Verbindung, etc. oder einer nicht lösbaren Befestigung, beispielsweise durch Kleben, Löten, etc. an der Halterung 20 befestigt sein. Die Befestigung bzw. Verschraubung 26a des Adapterabschnitts 22 an der Halterung 20 ist bei der in den Figuren gezeigten Halterung 20 nicht im Schwerpunkt 29 der Grundplatte 26 vorgesehen, sondern von diesem versetzt.

Im Folgenden wird mit Bezug auf Fig. 2a und 2b und Fig. 4 die Verbindung zwischen der Halterung 20 und dem Schüttel- und Mischgerät 1 näher beschrieben. Fig. 2a und 2b zeigen jeweils eine Querschnittsansicht der Exzentereinheit 4 und des oberen Gehäuseabschnitts 5 des Schüttel- und Mischgeräts 1, sowie des Adapterelements 21. In Fig. 2a sind die Exzentereinheit 4, der obere Gehäuseabschnitt 5 und das Adapterelement 21 separat voneinander dargestellt und in Fig. 2b in einem zusammengesetzten, d. h. miteinander verbundenen Zustand. Fig. 4 zeigt eine Querschnittsansicht des Schüttel- und Mischgeräts 1 mit aufgesetzter Halterung 20.

Die Exzentereinheit 4 ist über eine Antriebsachse 7 (in Fig. 2a, 2b nur teilweise gezeigt) mit dem Antrieb 7a (s. Fig. 4) des Schüttel- und Mischgeräts 1 verbunden und wird im Betrieb durch diese angetrieben. Durch die Drehachse der Antriebsachse 7 ist eine zentrale Achse Z definiert.

Der zweite Kupplungsabschnitt der Verbindung ist an dem Adapterelement 21 vorgesehen und als ein Stecker 23 ausgebildet. Der Stecker 23 erstreckt sich von einem oberen bzw. ersten Ende 23a zu einem unteren bzw. zweiten Ende 23b, wobei das erste Ende 23a des Steckers 23 an dem Adapterabschnitt 22 des Adapterelements 21 vorgesehen ist. Eine Mittelachse des Steckers 23 von dem ersten Ende 23a zum zweiten Ende 23b entspricht der zentralen Achse Z wenn die Halterung 20 an dem Schüttel- und Mischgerät 1 angebracht ist (s. Fig. 2b, 4). Senkrecht zur Mittelachse bzw. der zentralen Achse Z weist der Stecker 23 einen Querschnitt auf, der die Form eines regelmäßigen Sechsecks hat, durch dessen Mittelpunkt die Mittelachse bzw. zentrale Achse Z verläuft.

Weiter ist an der Außenseite des Steckers 23 eine Umfangsnut 24 vorgesehen, in die ein O-Ring 25 eingesetzt ist. Der O-Ring 25 ist vorzugsweise aus einem elastischen Material, z. b. einem Gummi, gebildet. Die Tiefe der Umfangsnut 24 und die Dicke des O-Rings 25 sind dabei so gewählt, dass der O-Ring 25 aus der Umfangsnut 24 in radialer Richtung hervorsteht. Somit bildet der O-Ring einen Verbreiterungsabschnitt des Steckers 23, an dem der Außendurchmesser des Steckers größer ist als der Außendurchmesser eines benachbarten Steckerabschnitts, d. h. der Außendurchmesser des Steckers oberhalb und unterhalb des Verbreiterungsabschnitts.

Vorzugsweise weist der Adapterabschnitt 22 senkrecht zur zentralen Achse Z eine größere radiale Erstreckung, beispielsweise einen größeren Durchmesser, auf als der Stecker 23, so dass der Adapterabschnitt 22 unten, d. h. in Richtung des Steckers 23, einen Vorsprung 16b aufweist. Der Adapterabschnitt 22 kann beispielsweise im Wesentlichen zylinderförmig ausgebildet sein mit der zentralen Achse Z als Mittelachse des Zylinders.

Weiter ist in Fig. 2a, 2b und Fig. 4 der obere Gehäuseabschnitt 5 mit einem oberen bzw. ersten Ende 5a und einem unteren bzw. zweiten Ende 5b gezeigt. Eine Mittelachse des oberen Gehäuseabschnitts 5 von dem ersten Ende 5a zum zweiten Ende 5b entspricht der zentralen Achse Z (s. Fig. 2b, 4). Die mittige Ausnehmung 6 des oberen Gehäuseabschnitts 5 erstreckt sich von dem ersten Ende 5a zum zweiten Ende 5b und bildet somit einen Kanal durch den oberen Gehäuseabschnitt 5 entlang der zentralen Achse Z. Wie in Fig. 2a gezeigt umfasst die mittige Ausnehmung 6 im Wesentlichen drei Ausnehmungsabschnitte 8, 9, 10, wobei der obere Ausnehmungsabschnitt 8 an das erste Ende 5a des oberen Gehäuseabschnitts 5 anschließt, der untere Ausnehmungsabschnitt 10 an das zweite Ende 5b des oberen Gehäuseabschnitts 5 anschließt und der mittlere Ausnehmungsabschnitt 9 entlang der zentralen Achse Z zwischen dem oberen Ausnehmungsabschnitt 8 und dem unteren Ausnehmungsabschnitt 10 vorgesehen ist.

Die Ausnehmungsabschnitte 8, 9, 10 sind jeweils im Wesentlichen zylinderförmig ausgebildet mit der zentralen Achse Z als Mittelachse. Der Durchmesser des oberen Ausnehmungsabschnitts 8 senkrecht zur zentralen Achse Z ist vorzugsweise an einen Außendurchmesser des ersten Kupplungsabschnitts 15, welcher an der Exzentereinheit 4 vorgesehen ist (s. u.) angepasst. Vorzugsweise ist der Durchmesser des oberen Ausnehmungsabschnitts 8 geringfügig größer als der entsprechende Außendurchmesser des ersten Kupplungsabschnitts 15, so dass der erste Kupplungsabschnitt 15 im Wesentlichen formschlüssig, d. h. im Wesentlichen spaltfrei, in den oberen Ausnehmungsabschnitt 8 einbringbar ist (s. Fig. 2b, 4). Der mittlere Ausnehmungsabschnitt 9 weist einen größeren Durchmesser auf als der obere Ausnehmungsabschnitt 8, so dass zwischen dem oberen Ausnehmungsabschnitt 8 und dem mittleren Ausnehmungsabschnitt 9 eine Schulter 9a gebildet ist.

Der Durchmesser des unteren Ausnehmungsabschnitts 10 ist vorzugsweise an den Durchmesser der Exzenternabe 14 der Exzentereinheit 4 (s. u.) senkrecht zur zentralen Achse Z angepasst. Vorzugsweise ist der Durchmesser des unteren Ausnehmungsabschnitts 10 geringfügig größer als der Durchmesser der Exzenternabe 14, so dass die Exzenternabe 14 im Wesentlichen formschlüssig, d. h. im Wesentlichen spaltfrei, in den unteren Ausnehmungsabschnitt 10 einbringbar ist (s. Fig. 2b, 4). Weiter ist an der Wandung des unteren Ausnehmungsabschnitts 10 in Umfangsrichtung ein Vorsprung 11a ausgebildet, der in die Ausnehmung 6 vorsteht.

Auf axialer Höhe des mittleren Ausnehmungsabschnitts 9 weist der obere Gehäuseabschnitt 5 eine Durchgangsbohrung 12 auf, die sich horizontal, d. h. senkrecht zur zentralen Achse Z, von der Außenseite des oberen Gehäuseabschnitts 5 bis zu der Ausnehmung 6 erstreckt. Die Durchgangsbohrung 12 ist dazu ausgebildet, einen Stift 13, der eine Spitze 13a aufweist, aufzunehmen.

Die Exzentereinheit 4 umfasst eine Exzenternabe 14 mit einem oberen bzw. ersten Ende 14a und einem unteren bzw. zweiten Ende 14b der Exzenternabe 14. Das zweite Ende 14b der Exzenternabe 14 steht mit der Antriebsachse 7 in Verbindung. An ihrer Außenseite weist die Exzenternabe 14 eine Umfangsnut 11b auf, die komplementär zu dem Vorsprung 11a des unteren Ausnehmungsabschnitts 10 ausgebildet ist um den Vorsprung 11a aufzunehmen.

Auf bzw. an der Exzenternabe 14 ist der erste Kupplungsabschnitt 15 vorgesehen, der zumindest teilweise über das erste Ende 14a der Exzenternabe 14 hervorsteht. Der erste Kupplungsabschnitt 15 ist fest mit der Exzenternabe 14 verbunden oder integral mit der Exzenternabe 14 bereitgestellt.

Der erste Kupplungsabschnitt 15 umfasst ein oberes bzw. erstes Ende 15a und ein unteres bzw. zweites Ende 15b. Das zweite Ende 15b des ersten Kupplungsabschnitts 15 kann, wie in Fig. 2a, 2b und 4 gezeigt, unterhalb des ersten Endes 14a der Exzenternabe 14 vorgesehen sein. Eine axiale Bohrung 17 des ersten Kupplungsabschnitts 15 erstreckt sich von dem ersten Ende 15a zum zweiten Ende 15b des ersten Kupplungsabschnitts 15, wobei eine Mittelachse der Bohrung 17 der zentralen Achse Z entspricht. Die Bohrung 17 umfasst einen oberen Bohrungsabschnitt 17a, der an das erste Ende 15a des ersten Kupplungsabschnitts 15 anschließt, und einen unteren Bohrungsabschnitt 17b, der an das zweite Ende 15b des ersten Kupplungsabschnitts 15 anschließt.

Der obere Bohrungsabschnitt 17a weist eine im Wesentlichen zylindrische Form auf, wobei der Querschnitt des oberen Bohrungsabschnitts 17a senkrecht zur zentralen Achse Z komplementär zu dem Adapterabschnitt 22 ausgebildet ist, d. h. der Durchmesser des oberen Bohrungsabschnitts 17a und geringfügig größer ist als der Durchmesser des Adapterabschnitts 22, so dass der Adapterabschnitt 22 im Wesentlichen formschlüssig, d. h. im Wesentlichen spaltfrei, in den oberen Bohrungsabschnitt 17a einbringbar ist (s. Fig. 2b, 4). Der untere Bohrungsabschnitt 17b weist einen kleineren Durchmesser senkrecht zur zentralen Achse Z auf als der obere Bohrungsabschnitt 17a, so dass zwischen dem oberen Bohrungsabschnitt 17a und dem unteren Bohrungsabschnitt 17b eine Schulter 16a gebildet ist, die an den Vorsprung 16b des Adapterabschnitts angrenzt wenn der Adapter 21 eingesetzt ist (s. Fig. 2b, 4).

Der untere Bohrungsabschnitt 17b weist eine geometrische Form auf, die komplementär zu dem Stecker 23 ausgebildet ist, d. h. senkrecht zur zentralen Achse Z weist der untere Bohrungsabschnitt 17b einen Querschnitt auf, der die Form eines regelmäßigen Sechsecks hat, durch dessen Mittelpunkt die zentrale Achse Z verläuft. Die Querschnittsfläche des unteren Bohrungsabschnitts 17b senkrecht zur zentralen Achse Z ist dabei geringfügig größer als die Querschnittsfläche des Steckers 23, so dass der Stecker 23 im Wesentlichen formschlüssig, d. h. im Wesentlichen spaltfrei, in den unteren Bohrungsabschnitt 17b einbringbar ist (s. Fig. 2b, 4). Damit ist der Stecker 23 gegen ein Verdrehen in der Bohrung 17 gesichert (formschlüssige Verbindung in radialer Richtung, d. h. senkrecht zur zentralen Achse Z).

Der obere Bohrungsabschnitt 17a weist in Richtung der zentralen Achse Z eine Länge auf, die höchstens so groß ist wie die Länge des Adapterabschnitts 22 in Richtung der zentralen Achse Z. Der untere Bohrungsabschnitt 17b weist in Richtung der zentralen Achse Z eine Länge auf, die gleich groß ist wie die Länge des Steckers 23 in Richtung der zentralen Achse Z, so dass der Stecker 23 mit seinem zweiten Ende 23b an dem Grund des unteren Bohrungsabschnitts 17b bzw. der Exzenternabe 14 (s. u.) anstößt.

An das zweite Ende 15b des ersten Kupplungsabschnitts 15 angrenzend weist der untere Bohrungsabschnitt 17b einen Verbreiterungsabschnitt 17c auf, dessen Querschnittsfläche sich entlang der zentralen Achse Z in Richtung des zweiten Endes 15b vergrößert. Der Verbreiterungsabschnitt 17c ist dazu ausgebildet, den O-Ring 25 des zweiten Steckers 23 aufzunehmen, wenn der Stecker 23 in die Bohrung 17 eingebracht wird, so dass der O-Ring 25 in den Verbreiterungsabschnitt 17c einrastet um das Adapterelement 21 in axialer Richtung nach oben in dem ersten Kupplungsabschnitt 15 zu sichern (kraftschlüssige Verbindung in axialer Richtung, d. h. parallel zur zentralen Achse Z). Nach unten ist die Bohrung 17 bzw. der Verbreiterungsabschnitt 17c durch die Exzenternabe 14 geschlossen.

An seiner Außenseite weist der erste Kupplungsabschnitt 15 eine im Wesentlichen zylindrische Form auf, die an die Form des oberen Ausnehmungsabschnitts 8 und des mittleren Ausnehmungsabschnitts 9 des oberen Gehäuseabschnitts 5 angepasst ist, so dass ein Vorsprung 9b der Außenseite des ersten Kupplungsabschnitts 15 an die Schulter 9a der Ausnehmung 6 des oberen Gehäuseabschnitts 5 angrenzt um ein axiales Verrutschen des ersten Kupplungsabschnitts 15 in dem oberen Gehäuseabschnitt 5 nach oben zu verhindern. Ein Verdrehen des ersten Kupplungsabschnitts gegenüber dem oberen Gehäuseabschnitt 5 wird durch ein Sackloch 12a in der Außenseite des ersten Kupplungsabschnitts 15 verhindert, welches mit der Durchgangsbohrung 12 des oberen Gehäuseabschnitts 5 korrespondiert bzw. eine Verlängerung der Durchgangsbohrung 12 ausbildet um die Spitze 13a des durch die Durchgangsbohrung 12 geführten Stifts 13 aufzunehmen (s. Fig. 2b, 4).

Das Schüttel- und Mischgerät 1 ist in einem Zustand bereitgestellt, in dem die Exzentereinheit 4 mit dem ersten Kupplungsabschnitt 15 in dem Gehäuse 2 angeordnet ist und der obere Gehäuseabschnitt 5 an der Exzentereinheit 4 und dem ersten Kupplungsabschnitt 15 befestigt ist (s. Fig. 2b, 4). Dabei werden die Exzenternut 14 und der daran befestigte erste Kupplungsabschnitt 15 in dem oberen Gehäuseabschnitt 5 durch den Vorsprung 9b des ersten Kupplungsabschnitts 15, welcher an der Schulter 9a des oberen Gehäuseabschnitts 5 anliegt, und durch das Zusammenwirken des Vorsprungs 11a des oberen Gehäuseabschnitts 5 und der Umfangsnut 11b der Exzenternut 14 in Richtung der zentralen Achse Z, d. h. in axialer Richtung, gehalten. Weiter werden die Exzenternut 14 und der daran befestigte erste Kupplungsabschnitt 15 durch die Durchgangsbohrung 12 und das Sackloch 12a in Zusammenwirken mit dem Stift 13 gegen ein Verdrehen in dem oberen Gehäuseabschnitt 5 gesichert (s. Fig. 2b, 4).

Zum Befestigen der Halterung 20 an dem Schüttel- und Mischgerät 1 wird die Halterung 20, wie in Fig. 1 schematisch durch den Pfeil V gezeigt, in Richtung der zentralen Achse Z nach unten geführt, so dass der Stecker 23 durch die Ausnehmung 6 des oberen Gehäuseabschnitts 5 in vom ersten Ende 15a in die Bohrung 17 eingebracht wird bis der O-Ring 25 in den Verbreiterungsabschnitt 17c einrastet und am Grund der Bohrung 17, d. h. an der Exzenternabe 14, ansteht. Die Elastizität des O-Rings 25 bewirkt, dass der O-Ring 25 in der Umfangsnut 24 des Steckers 23 zusammengepresst wird um den engeren Teil des Bohrungsabschnitts 17b zu passieren und sich anschließend in dem Verbreiterungsabschnitt 17c wieder ausdehnt um ein Herausrutschen des Steckers 23 aus der Bohrung 17 in axialer Richtung nach oben zu verhindern. Damit ist eine kraftschlüssige Verbindung zwischen dem Stecker 23 und der Bohrung 17 in axialer Richtung gebildet. Zum Lösen der Verbindung, d. h. Entnehmen der Halterung 20 aus dem Schüttel- und Mischgerät 1, ist dementsprechend eine ausreichend große Kraft in axialer Richtung nach oben, d. h. in Richtung des ersten Endes 15a erforderlich, die bewirkt, dass der O-Ring wieder in der Umfangsnut 24 zusammengepresst wird um den engeren Teil des Bohrungsabschnitts 17b zu passieren.

In dem in Fig. 2b, Fig. 3 und Fig. 4 gezeigten zusammengesetzten Zustand, d. h. wenn die Halterung 20 durch den zweiten Kupplungsabschnitt, d. h. den Stecker 23, in dem ersten Kupplungsabschnitt 15 gehalten wird, wird der Stecker 23 formschlüssig in der Bohrung 17 gehalten. Dies verhindert eine relative Drehbewegung zwischen Stecker 23 und Bohrung 17, d. h. eine Rotation des Steckers 23 in der Bohrung 17. Der Vorsprung 16b des Adapterabschnitts 22 in Zusammenwirken mit der Schulter 16a des ersten Kupplungsabschnitts 15, sowie das Anstehen des zweiten Endes 23b des Steckers 23 an der Exzenternabe 14 bewirken einen guten Kraftübertrag von der Exzenternabe auf den Stecker 23 und somit auf die Halterung 20.

In Fig. 4 ist zudem die Mittelachse M der Halterung 20 gezeigt, welche durch den Schwerpunkt 29 der Grundplatte 26 und parallel zu der zentralen Achse Z verläuft. Der Schwerpunkt 29 der Grundplatte 26 und somit auch die Mittelachse M sind von der zentralen Achse Z, auf der der erste und zweite Kupplungsabschnitt 15, 23, die Antriebsachse 7 und die Befestigung (Verschraubung 26a), die den Adapterabschnitt 22 an der Halterung 20 befestigt, beabstandet. Dadurch wird eine exzentrische Bewegung der Halterung 20 und somit auch der darin vorgesehenen Probe (nicht gezeigt) bewirkt, welche zu einer guten Durchmischung der Probe führt.

Auch wenn bei dem oben in Bezug auf die Figuren 1 bis 4 beschriebenen Ausführungsbeispiel der Stecker 23 der Steckverbindung an der Halterung 20 und die Bohrung 17, d. h. die Buchse der Steckverbindung an dem Schüttel- und Mischgerät 1 vorgesehen ist, so ist die Erfindung nicht darauf beschränkt. Beispielsweise kann der Stecker auch an dem Schüttel- und Mischgerät 1 vorgesehen sein und die Bohrung 17 an der Halterung 20. Auch muss die oben beschriebene Verbindung nicht als Steckverbindung ausgebildet sein, es kann vielmehr jede andere geeignete lösbare Verbindung zum Verbinden der Halterung und des Schüttel- und Mischgeräts, die in Verlängerung der Antriebsachse vorgesehen ist, verwendet werden, beispielsweise eine Schraubverbindung.

Auch kann anstelle des O-Rings 25 ein elastischer oder federnder Vorsprung an dem Stecker 23 vorgesehen sein. Dieser Vorsprung muss nicht über den gesamten Umfang des Steckers 23 ausgebildet sein, sondern kann auch nur teilweise oder an einer Stelle entlang des Umfangs vorgesehen sein.

Ferner kann das Schüttel- und Mischgerät auch ohne den oberen Gehäuseabschnitt 5 bereitgestellt sein bzw. kann der obere Gehäuseabschnitt 5 integral mit dem Gehäuse 2 ausgebildet sein.

## Patentansprüche

1. Schüttel- und/oder Mischgerät, umfassend:
einen Antrieb (7a) mit einer Antriebsachse (7),
eine von der Antriebsachse (7) angetriebene Exzentereinheit (4) mit einer Exzenternabe (14) und
eine Halterung (20) zur Aufnahme zumindest einer durch das Schüttel- und/oder Mischgerät (1) zu behandelnden Probe, wobei
die Exzenternabe (14) und die Halterung (20) mittels einer lösbaren Verbindung miteinander verbindbar sind um eine Bewegung der Exzenternabe (14) auf die Halterung (20) zu übertragen, wobei die lösbare Verbindung in Verlängerung der Antriebsachse (7) vorgesehen ist,
und wobei eine Mittelachse (M) der Halterung (20) von der Antriebsachse (7) beabstandet ist.

2. Schüttel- und/oder Mischgerät nach Anspruch 1, wobei die Exzenternabe (14) einen ersten Kupplungsabschnitt (15) der lösbaren Verbindung aufweist und die Halterung (20) einen zweiten Kupplungsabschnitt der lösbaren Verbindung aufweist und wobei der erste und der zweite Kupplungsabschnitt in Bezug auf ihre geometrische Form zumindest teilweise komplementär ausgebildet sind.

3. Schüttel- und/oder Mischgerät nach Anspruch 2, wobei einer der beiden Kupplungsabschnitte zumindest eine Bohrung (17) umfasst und der andere der beiden Kupplungsabschnitte zumindest einen in die Bohrung (17) einbringbaren und komplementär zur Bohrung ausgebildeten Stecker (23) umfasst.

4. Schüttel- und/oder Mischgerät nach Anspruch 3, wobei die Bohrung (17) und der Stecker (23) einen Querschnitt aufweisen, der von einer kreisrunden Form abweicht, vorzugsweise einen eckigen Querschnitt, weiter bevorzugt einen Querschnitt in Form eines regelmäßigen Polygons, insbesondere eines regelmäßigen Sechsecks.

5. Schüttel- und/oder Mischgerät nach Anspruch 3 oder 4, wobei der Stecker (23) einen Querschnitt aufweist, dessen Querschnittsfläche geringfügig kleiner ist als die Querschnittsfläche eines Querschnitts der Bohrung (17).

6. Schüttel- und/oder Mischgerät nach einem der Ansprüche 2 bis 5, wobei die Bohrung (17) einen Verbreiterungsabschnitt (17c) umfasst, dessen Innendurchmesser größer ist als der Innendurchmesser eines benachbarten Bohrungsabschnitts und wobei der Stecker (23) ebenfalls einen Verbreiterungsabschnitt umfasst, dessen Außendurchmesser größer ist als der Außendurchmesser eines benachbarten Steckerabschnitts und
wobei der Verbreiterungsabschnitt des Steckers (23) in den Verbreiterungsabschnitt (17c) der Bohrung (17) einrastet, wenn der Stecker in die Bohrung eingebracht wird.

7. Schüttel- und/oder Mischgerät nach Anspruch 6, wobei der Verbreiterungsabschnitt des Steckers durch einen O-Ring (25) gebildet ist, der in Umfangsrichtung an dem Stecker (23) vorgesehen ist, vorzugsweise in einer Umfangsnut (24) des Steckers (23).

8. Schüttel- und/oder Mischgerät nach einem der Ansprüche 2 bis 7, wobei der erste Kupplungsabschnitt (15), der zweite Kupplungsabschnitt und die Antriebsachse (7) eine gemeinsame zentrale Achse (Z) aufweisen wenn der erste und der zweite Kupplungsabschnitt miteinander verbunden sind.

9. Schüttel- und/oder Mischgerät nach einem der Ansprüche 2 bis 8, wobei die Bohrung (17) an dem ersten Kupplungsabschnitt (15) vorgesehen ist und der Stecker (23) an dem zweiten Kupplungsabschnitt.

10. Schüttel- und/oder Mischgerät nach einem der Ansprüche 2 bis 9, wobei der erste Kupplungsabschnitt (15) gegen ein Verdrehen gegenüber der Exzenternabe (14) gesichert ist.

11. Schüttel- und/oder Mischgerät nach einem der Ansprüche 2 bis 10, wobei der erste Kupplungsabschnitt (15) auf der Exzenternabe (14) befestigt ist, vorzugsweise unlösbar auf der Exzenternabe (14) befestigt ist.

12. Schüttel- und/oder Mischgerät nach einem der Ansprüche 2 bis 11, wobei der zweite Kupplungsabschnitt an einem Adapterelement (21) vorgesehen ist, welches mit der Halterung (20) verbindbar ist.

## Claims

1. A shaking and/or mixing device, comprising:
a drive (7a) having a drive shaft (7),
an eccentric unit (4) driven by the drive shaft (7) and having an eccentric hub (14), and
a holder (20) for receiving at least one sample to be treated by the shaking and/or mixing device (1), wherein
the eccentric hub (14) and the holder (20) are connectable to one another by means of a releasable connection in order to transmit a movement of the eccentric hub (14) onto the holder (20), the releasable connection being provided as an extension of the drive shaft (7),
and wherein a middle axis (M) of the holder (20) is spaced apart from the drive shaft (7).

2. The shaking and/or mixing device according to claim 1, wherein the eccentric hub (14) comprises a first coupling portion (15) of the releasable connection and the holder (20) comprises a second coupling portion of the releasable connection and wherein the first and the second coupling portions are designed at least partially complementary with respect to their geometric shape.

3. The shaking and/or mixing device according to claim 2, wherein one of the two coupling portions comprises at least one bore (17) and the other one of the two coupling portions comprises at least one plug (23) which can be inserted into the bore (17) and is designed complementary to the bore.

4. The shaking and/or mixing device according to claim 3, wherein the bore (17) and the plug (23) have a cross-section that deviates from a circular shape, preferably an angular cross-section, further preferably a cross-section in the shape of a regular polygon, in particular a regular hexagon.

5. The shaking and/or mixing device according to claim 3 or 4, wherein the plug (23) has a cross-section whose cross-sectional area is slightly smaller than the cross-sectional area of a cross-section of the bore (17).

6. The shaking and/or mixing device according to one of claims 2 to 5, wherein the bore (17) comprises a widening section (17c) whose inner diameter is greater than the inner diameter of an adjacent bore section, and wherein the plug (23) also comprises a widening section whose outer diameter is larger than the outer diameter of an adjacent plug section and
wherein the widening section of the plug (23) snaps into the widening section (17c) of the bore (17) when the plug is inserted into the bore.

7. The shaking and/or mixing device according to claim 6, wherein the widening section of the plug is formed by an O-ring (25) provided on the plug (23) in the circumferential direction, preferably within a circumferential groove (24) of the plug (23).

8. The shaking and/or mixing device according to one of claims 2 to 7, wherein the first coupling portion (15), the second coupling portion and the drive shaft (7) have a common central axis (Z) when the first and second coupling portions are connected to one another.

9. The shaking and/or mixing device according to one of claims 2 to 8, wherein the bore (17) is provided at the first coupling portion (15) and the plug (23) is provided at the second coupling portion.

10. The shaking and/or mixing device according to one of claims 2 to 9, wherein the first coupling portion (15) is secured against a rotation with respect to the eccentric hub (14).

11. The shaking and/or mixing device according to one of claims 2 to 10, wherein the first coupling portion (15) is attached on the eccentric hub (14), preferably non-releasably fixed on the eccentric hub (14).

12. The shaking and/or mixing device according to one of claims 2 to 11, wherein the second coupling portion is provided on an adapter element (21) connectable to the holder (20).

## Revendications

1. Appareil d'agitation et/ou de mélange, comprenant :
un entraînement (7a) avec un axe d'entraînement (7),
une unité excentrique (4) entraînée par l'axe d'entraînement (7) avec un moyeu excentrique (14) et
un support (20) pour recevoir au moins un échantillon à traiter par l'appareil d'agitation et/ou de mélange (1), dans lequel
le moyeu excentrique (14) et le support (20) sont connectables l'un à l'autre au moyen d'une connexion détachable afin de transmettre un mouvement du moyeu excentrique (14) au support (20), dans lequel la connexion détachable est prévue dans le prolongement de l'axe d'entraînement (7),
et dans lequel un axe central (M) du support (20) est espacé de l'axe d'entraînement (7).

2. Appareil d'agitation et/ou de mélange selon la revendication 1, dans lequel le moyeu excentrique (14) présente une première section de couplage (15) de la connexion détachable et le support (20) présente une deuxième section de couplage de la connexion détachable et dans lequel la première et la deuxième section de couplage sont réalisées de manière complémentaire au moins partiellement par rapport à leur forme géométrique.

3. Appareil d'agitation et/ou de mélange selon la revendication 2, dans lequel l'une des deux sections de couplage comprend au moins un alésage (17) et l'autre des deux sections de couplage comprend au moins un connecteur (23) qui peut être introduit dans l'alésage (17) et qui est réalisé de manière complémentaire à l'alésage.

4. Appareil d'agitation et/ou de mélange selon la revendication 3, dans lequel l'alésage (17) et le connecteur (23) présentent une section transversale qui s'écarte d'une forme circulaire, de préférence une section transversale angulaire, de manière davantage préférée une section transversale sous la forme d'un polygone régulier, en particulier d'un hexagone régulier.

5. Appareil d'agitation et/ou de mélange selon la revendication 3 ou 4, dans lequel le connecteur (23) présente une section transversale dont la surface de section transversale est légèrement plus petite que la surface de section transversale d'une section transversale de l'alésage (17).

6. Appareil d'agitation et/ou de mélange selon l'une quelconque des revendications 2 à 5, dans lequel l'alésage (17) comprend une section d'élargissement (17c) dont le diamètre intérieur est supérieur au diamètre intérieur d'une section d'alésage adjacente et dans lequel le connecteur (23) comprend également une section d'élargissement dont le diamètre extérieur est supérieur au diamètre extérieur d'une section de connecteur adjacente et
dans lequel la section d'élargissement du connecteur (23) s'enclenche dans la section d'élargissement (17c) de l'alésage (17) lorsque le connecteur est introduit dans l'alésage.

7. Appareil d'agitation et/ou de mélange selon la revendication 6, dans lequel la section d'élargissement du connecteur est formée par un joint torique (25) qui est prévu sur le connecteur (23) dans la direction périphérique, de préférence dans une rainure périphérique (24) du connecteur (23).

8. Appareil d'agitation et/ou de mélange selon l'une quelconque des revendications 2 à 7, dans lequel la première section de couplage (15), la seconde section de couplage et l'axe d'entraînement (7) présentent un axe central commun (Z) lorsque la première et la seconde section de couplage sont connectées l'une à l'autre.

9. Appareil d'agitation et/ou de mélange selon l'une quelconque des revendications 2 à 8, dans lequel l'alésage (17) est prévu sur la première section de couplage (15) et le connecteur (23) sur la seconde section de couplage.

10. Appareil d'agitation et/ou de mélange selon l'une quelconque des revendications 2 à 9, dans lequel la première section de couplage (15) est bloquée contre une rotation par rapport au moyeu excentrique (14).

11. Appareil d'agitation et/ou de mélange selon l'une quelconque des revendications 2 à 10, dans lequel la première section de couplage (15) est fixée sur le moyeu excentrique (14), de préférence, il est fixée de manière non libérable sur le moyeu excentrique (14).

12. Appareil d'agitation et/ou de mélange selon l'une quelconque des revendications 2 à 11, dans lequel la seconde section de couplage est prévue sur un élément adaptateur (21) qui est connectable au support (20).
